(19)

Europäisches
Patentamt

European
Patent Office

Office européen
des brevets

(11) **EP 2 422 627 A1**

(12) **EUROPEAN PATENT APPLICATION**

(43) Date of publication:
**29.02.2012 Bulletin 2012/09**

(51) Int Cl.:
*A23L 1/03* $^{(2006.01)}$     *A23G 9/36* $^{(2006.01)}$

(21) Application number: **10174125.4**

(22) Date of filing: **26.08.2010**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO SE SI SK SM TR**<br>Designated Extension States:<br>**BA ME RS** | (72) Inventors:<br> • **Banerjee, Gautam<br>Whitefield<br>Bangalore 560 066 (IN)**<br> • **Shankar, Raviprasad<br>Whitefield<br>Bangalore 560 066 (IN)** |
| (71) Applicant: **Unilever N.V.<br>3013 AL Rotterdam (NL)** | (74) Representative: **Clarke, Christopher John<br>Unilever Patent Group<br>Olivier van Noortlaan 120<br>3133 AT Vlaardingen (NL)** |

(54) **An ice cream composition and process of preparation thereof**

(57)     The present invention relates to an ice cream composition comprising:

a. 40-80% water by weight of the composition,

b. 5-30% sweetening agent by weight of the composition,

c. 5-40% milk solids by weight of the composition, and;

d. $10^5$ to 10'° colony forming units of *Bacillus coagulans* per gram of the composition,

wherein the composition has an overrun of from 5% to 200%

**EP 2 422 627 A1**

## Description

**Technical Field**

The present invention relates to an ice cream composition and process of preparation thereof. It particularly relates to an ice cream composition comprising probiotic bacteria.

**Background and prior art**

An optimal balance of microbial organisms in the intestine is suggested to be an important aspect of maintaining good health. Certain bacteria that help to maintain such a favourable balance are considered to be probiotics.

Probiotic bacteria are widely used in dairy products such as yoghurt which are typically stored at temperature greater than 0 °C. Typically ice creams are stored at temperature of about -18 °C. However, ice creams may be subjected to higher temperatures, for example when the consumer transports the ice cream to their home from the freezer in a shop, or in some countries where electrical power supply is intermittent due to frequent power cuts. Viability of probiotic bacteria under such temperature abuse conditions during storage is a problem. Another problem is loss of viability during processing of ice creams, particularly during aeration.

EP 1882418 A1 (Unilever, 2009) discloses an aerated frozen confectionery product having at least 3 wt% milk solids non fat and 6 wt% or less fat which product comprises at least 10' colony forming units of probiotic bacteria per gram of product and has a mean ice crystal size of less than 55 microns and/or a mean air cell size of less than 50 microns.

US2010074993 (SENSIENT FLAVORS LLC) describes a modified food product comprising a food product and a coating. The coating may comprise a fat or fat-containing composition, a probiotic microorganism and salt. In one embodiment, the coating may comprise a fat or fat-containing composition, a probiotic microorganism and at least one of a whey powder, a milk powder and a combination thereof. Examples of suitable probiotic microorganisms include, but are not limited to, yeasts and molds such as *Saccharomyces, Debaromyces, Candida, Pichia, Torulopsis, Aspergillus, Rhizopus, Mucor* and *Penicillium.* Probiotic bacteria suitable for use in the present invention include, but are not limited to, strains of *Lactobacillus, Bifidobacterium, Bacteroides, Clostridium, Fusobacterium, Melissococcus, Propionibacterium, Enterococcus, Lactococcus, Staphylococcus, Peptostrepococcus, Bacillus, Pediococcus, Micrococcus, Leuconostoc, VVeissella, Aerococcus, Oenococcus* and *Streptococcus.*

W010008491 (RITTER NATURAL SCIENCES LLC) describes a composition comprising a lactose composition with decreased lactose content and an effective amount of a probiotic, a prebiotic, or a mixture thereof. It discloses a lactose composition with decreased lactose content and an effective amount of a probiotic, a prebiotic, or a mixture thereof, wherein the lactose composition with decreased lactose content comprises at least about 0.001 percent lactose. The lactose composition with decreased lactose content comprises lactose present in a substance chosen from the group consisting of milk or milk products comprising flavored-milk, yogurt, a yogurt drink, a cheese, butter, ice cream, sherbet, a liquado, and a smoothie.

WO 2005055934 (Ganeden Biotech Inc.) discloses a method of treating and preventing irritable bowel syndrome (IBS) and carbohydrate malabsorption using a composition containing a *Bacillus coagulans* bacterium and a complementary enzyme from the group consisting of a lactase, a fructase, a lipase, an amylase, and a proteinase. The composition may be in the form of a tablet, capsule, powder, liquid, or in a formulation with a food product. The food product may be a dairy product such as a nutritional bar, ice cream, non-dairy creamer, sugar substitute, and tea bag.

One of the objects of the present invention is to provide a process for preparation of an ice cream composition comprising probiotic bacteria, with improved viability of probiotic bacteria during processing.

Another object of the present invention is to provide an ice cream composition comprising probiotic bacteria, with improved viability of the bacteria under conditions of temperature fluctuations during storage.

The present inventors have surprisingly found that a specific type of probiotic bacteria, *Bacillus coagulans,* has improved viability during the processing of ice cream, particularly during aeration, and also following fluctuations in temperature during storage, thus resulting in a relatively large number of viable bacteria.

**Summary of the Invention**

According to a first aspect of the invention there is provided an ice cream composition comprising:

    a. 40-80% water by weight of the composition,
    b. 5-30% sweetening agent by weight of the composition,
    c. 5-40% milk solids by weight of the composition, and;
    d. $10^5$ to $10^{\prime\circ}$ colony forming units of *Bacillus coagulans* per gram of the composition,

wherein the composition has an overrun of from 5% to 200%.

According to a second aspect of the invention there is provided a process for preparing an ice cream composition comprising the steps of:

> a. mixing 40-80% water, 5-30% parts sweetening agent, and 5-40% parts milk solids to form an ice cream premix,
> b. heating the premix to temperature in the range of 60-150 °C,
> c. cooling the premix to temperature in the range of 5-40 °C
> d. adding $10^5$ to $10^{10}$ colony forming units of *Bacillus coagulans* per gram of the premix to form a mixture, and;
> e. freezing and aerating the mixture to form the ice cream composition.

According to a third aspect of the invention there is provided the ice cream composition of the first aspect directly obtainable by the process of the second aspect.

## Detailed Description of the Invention

Ice cream composition

The ice cream composition comprises water, sweetening agent, milk solids and $10^5$ to $10^{10}$ colony forming units of *Bacillus coagulans* per gram of the composition.

Water is 40-80% by weight of the composition. Water is preferably at least 45%, more preferably at least 50% and most preferably at least 55% by weight of the composition. The composition comprises preferably up to 75%, more preferably up to 70% and most preferably up to 65% water by weight of the composition.

The sweetening agent is 5-30%, preferably 10-25%, more preferably from 15-20% by weight of the composition. Although low calorie sweetening agents such as sucralose, saccharin or aspartame may be used as sweetening agent, the sweetening agent is preferably one or more sugars. The term sugar as used herein includes a monosaccharide, a disaccharide, a polysaccharide, a sugar alcohol, or a mixture thereof monosaccharide is a chemical compound of general formula $C_nH_{2n}O_n$ where n = 3-7, and disaccharide is a condensation product of any two identical or different monosaccharides. Particularly preferred monosaccharides include glucose and fructose. A particularly preferred disaccharide is sucrose. Sweetening agents also include corn syrups (also called glucose syrups), which are mixtures of mono-, di- and higher saccharides and sugar alcohols.

Milk solids are 5-40% by weight of the composition. Milk solids include non-fat milk solids (lactose, milk protein and minerals) and milk fat (also called butter fat). Milk solids are preferably present in an amount of at least 10%, more preferably at least 15% and most preferably at least 20% by weight of the composition. The composition comprises preferably up to 35%, more preferably up to 30% and most preferably up to 25% milk solids. Milk solids may be added to the composition in form of milk powder. Alternatively, fresh milk or Pasteurized milk may be added to the composition to provide the requisite amount of milk solids.

The ice cream composition preferably comprises fat. The fat is preferably 2-20%, more preferably 4-18% and most preferably 6-16% by weight of the composition. The fat may by a vegetable fat and / or milk fat.

The ice cream composition comprises preferably 1-10%, more preferably 2-9% and most preferably 3-8% protein. Protein is preferably a wheat protein, soya protein, or milk protein.

The ice cream composition may preferably comprise other optional ingredients including flavours, fruit/vegetable, and chocolate.

The ice cream composition comprises $10^5$ to $10'°$ colony forming units of *Bacillus coagulans* per gram. *Bacillus coagulans* is a non-pathogenic gram-positive bacteria that possesses the ability to sporulate. *Bacillus coagulans* bacterial strains that may be used in the ice cream composition include strains from the American Type Culture Collection (ATCC, Manasas, USA) having the following accession numbers: *Bacillus coagulans* Hammer NRS 727 (ATCC No 11014), *Bacillus coagulans* Hammer strain C (ATCC No 11369), *Bacillus coagulans* Hammer (ATCC No 31284), *Bacillus coagulans* Hammer NCA 4259 (ATCC No 19549). Purified *Bacillus coagufans* bacteria are iso available from the Deutsche Sarumlung von Mikroorganismen und Zei!kuturen GmbH (Braunschweig, Germany) using the following accession numbers: Bacillus coagulants Hammer 1915 (DSM No. 2356); Bacillus coagulans Hammer 1915 (DSM No. 2383, corresponds to ATCC No. 11014); Bacillus coagulans Hammer (DSM No. 2384, corresponds to ATCC No. '11369); and Bacillus coagulant Hammer (DSM No. 2385, corresponds to ATCC No. 15949). Bacillus coagulans bacteria can also be obtained from commercial suppliers such as K. K. Fermentation (Kyoto, Japan) and Nebraska Culture (Walnut Creek, CA). Compositions include strains or variants derived from Bacillus coagulants Hammer strain ATCC No. 31284 such as ATCC PTA- 6085, PTA-6086, or I='TA-5087.

*Bacillus coagulans* may be in the form of vegetative cells, spores or mixtures thereof. Preferably, *Bacillus coagulans* is in form of spores. Without wishing to be limited by any theory, it is believed that viability of spores would be better than the viability of vegetative cells.

The process for preparation of the ice cream composition

The process comprises the steps of:

a. mixing 40-80 parts water, 5-30 parts sweetening agent, 5-40 parts milk solids to form an ice cream premix,
b. heating the premix to temperature in the range of 60-150 °C
c. cooling the premix to temperature in the range of 2-40 °C
d. adding $10^5$ to $10^{10}$ colony forming units of *Bacillus coagulans* per gram of the premix to form a mixture, and;
e. freezing and aerating the mixture to form the ice cream composition.

The step (a) is preferably carried out by adding all the ingredients of the ice cream premix in a mixing vessel. All the ingredients of the ice cream composition other than *Bacillus coagulans* are preferably added to the premix in the step (a).

It is preferred that the premix of the step (a) is subjected to a step of homogenization in a homogenizer at pressure of 100-350 bar, before subjecting the premix to the step (b).

The step (b) is carried out by heating the premix to a temperature in the range of 60-150 °C. The step (b) may be Pasteurization where the premix is heated to temperature in the range of 60-100 °C, preferably 70-90 °C and most preferably in the range 75-85 °C. The duration of Pasteurization is preferably from 5 seconds to 2 minutes, more preferably from 5-50 seconds and most preferably from 5-30 seconds. Alternatively the step (b) may be of UHT treatment where the premix is heated to temperature in the range of 100-150 °C preferably 110-140, more preferably 120-135 °C for a short duration. The duration of UHT is preferably 0.5-60 seconds, preferably 1-15 seconds.

The premix, after the heat treatment in the step (b) is cooled to a temperature in the range of 2-40 °C in the step (c)

The step (d) includes adding $10^5$ to $10^{10}$ colony forming units of *Bacillus coagulans* per gram of the premix to form a mixture. Preferably the step (d) includes stirring to uniformly disperse *Bacillus coagulans* within the premix.

The step (e) includes freezing and aerating the mixture obtained the step (d) to form the ice cream composition. The mixture is frozen by cooling it to temperature preferably in the range -150 °C to 0 °C, more preferably in the range -10 °C to -30 °C. Aeration may be prior to or simultaneous with the step (e) of freezing to obtain the ice cream composition. The extent of aeration is expressed in terms of %overrun defined below:

$$\% \text{ overrun} = (\text{density of the mixture} / \text{density of ice cream} - 1) * 100$$

The ice cream composition has % overrun in the range of 5-200%, preferably in the range of 10-150%, more preferably in the range 20-120%, most preferably in the range 50-100%.

**Examples**

The invention will now be demonstrated with help of examples. The examples are for the purpose of illustration only and do not limit the scope of the invention in any manner.

Materials

Lyophilized cultures of *Bifidobacterium lactis Bb12, Lactobacillus rhamnosus* GG and *Lactobacillus casei Shirota* were obtained from Chr Hansen (Bifidobacterium lactis Bb-12), Horsholm, Denmark, Valio (Lactobacillus rhamnosus GG) Helsinki, Finland, Yakult (Lactobacillus casei Shirota), Japan. The *Bacillus coagulans* strain in form of spores was purchased from Pharmed India Ltd, Bangalore. India. Skimmed milk powder, solubilised wheat protein, fat (palm mid fraction), crystal sugar (sucrose), and glucose syrup were procured in India. Deionized water was used for preparation of ice cream. For the analysis, deionized water and MRS medium from Himedia was used. All other chemicals used for the analysis were of analytical grade.

Process for preparation of ice cream composition

Ice cream premix ingredients comprising 8.5% skimmed milk powder, 1.25%, 8% fat (palm oil mid fraction), 13.5% sugar and 5% glucose syrup and rest water were mixed and homogenized at 210 bars with a flow rate of 60 L/hr and Pasteurized for 15 seconds at 82 °C. The premix was cooled to 25 °C and aged overnight at 4 °C after which the probiotic strains were added to four separate batches at a specific loading as frozen pellets and mixed well by gently stirring to obtain the ice cream mixtures. The ice cream mixtures were processed at pilot plant scale using TIPO-TYP - Freezer 150. Ice cream was produced at 100% overrun with an extrusion temperature of -6 °C. Samples of ice cream were dosed into 100 mL bottles and hardened overnight at -18 °C. Viability of bacteria was measured post-aeration.

The aerated ice cream compositions were subjected to a temperature abuse regime for 15 days (stored at -20 °C for 12 hours followed by storage at -7 °C for 12 hours), followed by storage at -20 °C for 6 months. Viability of bacteria was also measured for the ice cream samples subjected to temperature abuse conditions in storage.

Viability testing

Viability testing was carried out by the standard plating technique. Briefly, for L. *rhamnosus* GG, *B. lactis Bb12,* and *L.casei Shirota,* 10 g of sample was weighed into 90 mL diluent and mixed well in a stomacher. This suspension was serially diluted. 1 ml of the diluted sample was mixed with -20 ml of agar and poured onto a plate. In case of *B. lactis Bb12,* 0.05% Cysteine HCL was used in media. In case of B. *coagulans,* 10 g of sample was diluted to 250 mL with saline and sonicated for 10 minutes. This was serially diluted and kept at 70 °C for 30 minutes for spores to germinate and then plated on MRS agar. The plates were incubated at 40 °C for 48hrs / 72hrs in an anaerobic chamber.

Effect of aeration step on viability

Viability of bacteria was evaluated for various ice cream compositions immediately following the aeration step and also for samples that were directly frozen without the step of aeration and the results are tabulated below.

Table 1: Effect of aeration step on viability

| Probiotic in ice cream composition | Probiotic bacteria loading (log (cfu)/g) | Samples after aeration and freezing - Actual count (log (cfu)/g) | Loss in viability after aeration |
|---|---|---|---|
| *Bifidobacteria lactis Bb12* | 5.7 | 5.05 $\pm$ 0.5 | 12% |
| *Lactobacillus rhamnosus GG* | 5.7 | 4.81 $\pm$ 0.14 | 16% |
| *Lactobacillus casei Shirota* | 5.7 | 4.74 $\pm$ 0.16 | 17% |
| *Bacillus coagulans* | 7.8 | 7.77 $\pm$ 0.02 | 0% |

It can be seen from the above that the ice cream composition comprising probiotic *B.coagulans* suffers the least loss of viability of probiotic bacteria post aeration with respect to initial loading as compared to the ice cream composition post-aeration that comprise other probiotic bacteria.

Effect of temperature fluctuations during storage on viability

Viability of bacteria was evaluated for various ice cream compositions (all with 100% overrun) subjected to the temperature abuse regime and the results are tabulated below.

Table 2: Effect of temperature fluctuations during storage on viability

| Ice cream composition | Aerated samples subjected to the temperature abuse regime (log (cfu)/g) | Loss in viability after storage under temperature fluctuations |
|---|---|---|
| *Bifidobacteria lactis Bb12* | 4.16 $\pm$ 0.23 | 27% |
| *Lactobacillus rhamnosus* GG | 4.1 $\pm$ 0.34 | 28% |
| *Lactobacillus casei Shirota* | 4.2 $\pm$ 0.03 | 26% |
| *Bacillus coagulans* | 8.14 $\pm$ 0.09 | 0% |

It can be seen that the ice cream composition comprising *Bacillus coagulans* shows better viability as compared the ice cream compositions comprising other probiotic bacteria when subjected to temperature abuse regime.

The results above demonstrate that addition of *Bacillus coagulans* during processing of ice cream composition results into relatively large number of viable bacteria even when the compositions are subjected to aeration and/or fluctuations in temperature.

**Claims**

1. An ice cream composition comprising:

   a. 40-80% water by weight of the composition,
   b. 5-30% sweetening agent by weight of the composition,
   c. 5-40% milk solids by weight of the composition, and;
   d. $10^5$ to $10'°$ colony forming units of *Bacillus coagulans* per gram of the composition,

   wherein the composition has an overrun of from 5% to 200%.

2. An ice cream composition as claimed in claim 1 wherein the *Bacillus coagulans* is in the form of vegetative cells or spores.

3. An ice cream composition as claimed in claim 1 or claim 2 wherein the *Bacillus coagulans* is in the form of spores.

4. A process for preparing an ice cream composition comprising the steps of:

   a. mixing 40-80% water, 5-30% sweetening agent, and 5-40% parts milk solids to form an ice cream pre mix,
   b. heating the premix to temperature in the range of 60-150 °C,
   c. cooling the premix to temperature in the range of 2-40 °C
   d. adding $10^5$ to $10'°$ colony forming units of *Bacillus coagulans* per gram of the premix to form a mixture, and;
   e. freezing and aerating the mixture to form the ice cream composition, wherein aeration takes place prior to or simultaneously with freezing.

5. A process as claimed in claim 4 wherein the premix of the step (a) is subjected to a step of homogenization in a homogenizer at pressure of 100-350 bar.

6. An ice cream composition according to any one of the preceding claims 1-3 directly obtainable by the process according to any one of the preceding claims 4-5.

Europäisches
Patentamt

European
Patent Office

Office européen
des brevets

## EUROPEAN SEARCH REPORT

**Application Number**

EP 10 17 4125

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 1 882 418 A1 (UNILEVER PLC [GB]; UNILEVER NV [NL]) 30 January 2008 (2008-01-30) * the whole document * | 1-6 | INV. A23L1/03 A23G9/36 |
| A,D | WO 2005/055934 A2 (GANEDEN BIOTECH INC [US]; FARMER SEAN [US]; LEFKOWITZ ANDREW R [US]) 23 June 2005 (2005-06-23) * the whole document * | 1-6 | |
| A | ENDRES J R ET AL: "Safety assessment of a proprietary preparation of a novel Probiotic, Bacillus coagulans, as a food ingredient", FOOD AND CHEMICAL TOXICOLOGY, PERGAMON, GB, vol. 47, no. 6, 1 June 2009 (2009-06-01), pages 1231-1238, XP026087049, ISSN: 0278-6915, DOI: DOI:10.1016/J.FCT.2009.02.018 [retrieved on 2009-02-25] * the whole document * | 1-6 | |
| A | DATABASE FSTA [Online] INTERNATIONAL FOOD INFORMATION SERVICE (IFIS), FRANKFURT-MAIN, DE; 2009, SWATI JAISWAL ET AL: "Bacterial strains from local curd, ice-cream and natural milk cultures as potential probiotic candidate: isolation, characterization and in vitro analysis.", XP002624897, Database accession no. FS-2009-12-Pa3240 * abstract * | 1-6 | **TECHNICAL FIELDS SEARCHED (IPC)** A23L A23G |

-/--

The present search report has been drawn up for all claims

| Place of search | Date of completion of the search | Examiner |
|---|---|---|
| Munich | 25 February 2011 | Korb, Margit |

EPO FORM 1503 03.82 (P04C01)

**EUROPEAN SEARCH REPORT**

Application Number

EP 10 17 4125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | & SWATI JAISWAL, KANIKA KUNDU, SOURISH KARMAKAR, SUBIR KUNDU: "Bacterial strains from local curd, ice-cream and natural milk cultures as potential probiotic candidate: isolation, characterization and in vitro analysis", INTERNATIONAL JOURNAL OF PROBIOTICS AND PREBIOTICS, vol. 4, no. 3, 2009, page 187, INTERNATIONAL JOURNAL OF PROBIOTICS AND PREBIOTICS 2009 SCHOOL OF BIOCHEMICAL ENGINEERING, INSTITUTE OF TECHNOLOGY, BANARAS HINDU UNIVERSITY, VARANASI, 221 005, UP, INDIA | | |

-----

TECHNICAL FIELDS
SEARCHED          (IPC)

The present search report has been drawn up for all claims

| Place of search | Date of completion of the search | Examiner |
|---|---|---|
| Munich | 25 February 2011 | Korb, Margit |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 10 17 4125

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2011

| Patent document cited in search report | Publication date | Patent family member(s) | Publication date |
|---|---|---|---|
| EP 1882418 A1 | 30-01-2008 | NONE | |
| WO 2005055934 A2 | 23-06-2005 | AU 2004296815 A1 | 23-06-2005 |
| | | CA 2548149 A1 | 23-06-2005 |
| | | EP 1694273 A2 | 30-08-2006 |
| | | US 2009181000 A1 | 16-07-2009 |
| | | US 2009142315 A1 | 04-06-2009 |
| | | US 2008038240 A1 | 14-02-2008 |
| | | US 2005100535 A1 | 12-05-2005 |
| | | US 2008112942 A1 | 15-05-2008 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1882418 A1
- US 2010074993 A
- WO 10008491 A
- WO 2005055934 A